# EUROPEAN PATENT APPLICATION

(11) **EP 4 040 356 A1**
(43) Date of publication of application: **10.08.2022**
(21) Application number: 22155445.4
(22) Date of filing: 07.02.2022
(51) Int. Cl.: G06Q 10/06

(54) **SYSTEM AND METHOD FOR PROVIDING ATTRIBUTIVE FACTORS, PREDICTIONS, AND PRESCRIPTIVE MEASURES FOR EMPLOYEE PERFORMANCE**

(30) Priority: 06.02.2021 US 202163146144 P
(71) Applicant: Verint Americas Inc., Melville, NY 11747 (US)
(72) Inventor: EPSTEIN KOCH, Ron Peretz, Johns Creek, 30005 (US); ZAHARIA, Meidad, 7172516 Modi'in (IL)
(74) Representative: Bingham, Ian Mark

(57) **Abstract**

A system and method for attributing the performance of an organization employee or team to events in the employees' career record and predicting future performance. The system acquires historical career record data comprising data of an employee or team of employees, including key performance indexes (KPIs) of the employee/team; finds at least one signpost-an individual data point or group of data points in the career record data having a comparatively high correlation with one of the KPIs of the employee/team or with increases/decreases of the KPI; monitors the career record for new occurrences of the signposts; predicts the KPI or whether the KPI will increase/decrease as a function of the occurrence of the signpost, and transmits the predicted KPI or increase/decrease thereof and its attribution to the occurrence of the signpost to a data consumer. In some embodiments, the system provides prescriptive measures for improving future performance.

## Description

### BACKGROUND OF THE DISCLOSURE

### Field of the Disclosure

The disclosure herein relates generally to the field of data processing systems and methods for the analysis of employee performance and, in particular, relates to providing attributive factors, predictions, and prescriptive measures for employee performance.

### Description of Related Art

Workforce Engagement (WFE) software includes a suite of applications that together manage a wide range of information about employees and organizations.

### SUMMARY

In an aspect of the disclosure, there is a method for predicting performance of an employee and attribution thereof, comprising: receiving historical career record data of a plurality of employees; receiving from a user device, a data performance point of the employee, wherein the data performance point represents data regarding a performance of the employee; identifying a historical data performance point in the historical career record data, equivalent to the received data performance point; determining, a correlation between the historical data performance point and one historical signpost, wherein the one historical signpost is a group of data points in the historical career record data that precedes the historical data performance point; storing, the one historical signpost correlated with the historical data performance point; monitoring and identifying a present career record data of the employee for the one historical signpost; predicting a predicted data performance point in the present career record data as a function of the one historical signpost identified in the present career record data; and transmitting to a data consumer the predicted data performance point.

The method may further comprise transmitting to the data consumer the one historical signpost identified in the present career record data as a reason for the predicted data performance point based on the correlation of the historical signpost and the historical data performance point. The method may also further comprise receiving, from a user device, a prescriptive analytics request regarding the data performance point entered by the user device; identifying a plurality of historical signposts correlated to the data performance point; determining if any of the plurality of historical signposts also are prescriptive actions for the employee to achieve the data performance point; and transmitting the prescriptive actions to a data consumer.

In another aspect, the method wherein,
the data performance point is a key performance indexes (KPI) or a KPI with an associated KPI value,
the group of data points that is the one historical signpost is an individual data point,
the data performance point is a key performance indexes (KPI) or a KPI with an associated KPI value,
the group of data points that is the one historical signpost is an individual data point. wherein the historical career record data are acquired from at least one Workforce Engagement (WFE) database,
the KPIs of the employee is in a group comprising: average handle time (AHT), customer satisfaction score, productivity, quality score, coaching KPIs, and any combination thereof, and
the KPIs of the employee are in a group comprising: average handle time (AHT), customer satisfaction score, productivity, quality score, coaching KPIs, and any combination thereof.

In a further aspect of the disclosure, there is a system for predicting performance of an employee comprising a memory comprising instructions that when executed on a processor cause the system to perform the method disclosed. Such as, acquire a historical career record data of a plurality of employees; receive, from a user device, a data performance point of the employee, wherein the data performance point represents data regarding a performance of an employee; identify, a historical data performance point in a historical career record data equivalent to the received data performance point; determine, a correlation between the historical data performance point and one historical signpost, wherein the one historical signpost is a group of data points in the historical career record data that precedes the historical data performance point; store, the one historical signpost correlated with the historical data performance point; monitor and identify a present career record data of the one employee for the one historical signpost; predict a predicted data performance point in the present career record data as a function of the one historical signpost identified in the present career record data; and transmit to a data consumer the predicted data performance point. The system may perform the method disclosed

A non-transitory computer readable medium comprising computer readable instructions that, when executed by a processor of a processing system, cause the processing system to perform the method disclosed. Such as, acquire a historical career record data of a plurality of employees; receive, from a user device, a data performance point of an employee, wherein the data performance point represents data regarding a performance of the employee; identify, a historical data performance point in a historical career record data equivalent to the received data performance point; determine, a correlation between the historical data performance point and one historical signpost, wherein the one historical signpost is a group of data points in the historical career record data that precedes the historical data performance point; store, the one historical signpost correlated with the historical data performance point; monitor and identify a present career record data of the employee for the one historical signpost; predict a predicted data performance point in the present career record data as a function of the one historical signpost identified in the present career record data; and transmit to a data consumer the predicted data performance point.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Fig. 1 depicts a block diagram of a system for predicting the performance of an employee or team and attributing the predicted performance to events in a career record of the employee or team, according to some embodiments.
Fig. 2 depicts a method for predicting the performance of an employee or team and attributing the predicted performance to events in a career record of the employee or team, according to some embodiments.

### DETAILED DESCRIPTION

In the following, reference is made to embodiments of the disclosure. However, it should be understood that the disclosure is not limited to specifically described embodiments. Instead, any combination of the following features and elements, whether related to different embodiments or not, is contemplated to implement and practice the disclosure. Furthermore, although embodiments of the disclosure may achieve advantages over other possible solutions and/or over the prior art, whether or not a particular advantage is achieved by a given embodiment is not limiting of the disclosure. Thus, the following aspects, features, embodiments, and advantages are merely illustrative and are not considered elements or limitations of the appended claims except where explicitly recited in a claim(s). Likewise, reference to "the disclosure" shall not be construed as a generalization of any inventive subject matter disclosed herein and shall not be considered to be an element or limitation of the appended claims except where explicitly recited in a claim(s).

The present disclosure generally relates to a system and method for attributing a performance of an organization's employee from events in a career record of the employee to provide predictive and, in some embodiments, prescriptive analytics. Predictive and prescriptive analytics may help managers of organizations make better decisions and improve their employees' performances. In some embodiments, the system may also provide the reasoning of the expected predictive analytics.

The employee, as used herein, may be one employee, a plurality of employees, or a team of employees. In some embodiments, the organization is a contact or call center. As used and referenced herein, a "career record" and its logical linguistic relatives and/or derivates, means data from one or more sources regarding employee information comprising attributes, events, activities, and performances of an organizations' employee. The data in the career record may include key performance indexes (KPIs) of the employee and time stamping of the data in the career record.

As used and referenced herein, the data in the career record occurring or established before the present (before the endpoint of a historical interval) may be referred to as a historical career record. Therefore, KPIs as part of the data in the career record and occurring or established before the present (before the endpoint of a historical interval) may also be referred to as historical KPIs. Similarly, the data in the career record, which are changes to the data and new data in the career record (starting from the endpoint of the historical interval), will be referred to as a present career record data and a present KPI(s), respectively. KPI and career record may also be used if the present or historical aspects of these terms are not imperative to a description herein.

In some embodiments, the system acquires a historical career record data of the employee across databases of workforce optimization (WFO) software or Workforce Engagement (WFE) software, also known as WFE applications. In some embodiments, the historical career record data of an employee is acquired from other sources of employee career records. WFE applications may include a suite of applications that together manage a wide range of information about employees and organizations. The data stored in WFE application's databases are typically used for reporting (i.e., descriptive analytics) and hence may not easily lend itself to facilitating personnel or organizational decisions. Moreover, the WFE application data stored in WFE application databases may be siloed (as each WFE application generates its own reports), so these cannot be used to uncover a relationship between different information items or data points.

In some embodiments, the system receives, via a user entering input to the system, a data point representing a performance of an employee, hereinafter data performance point. In some embodiments, the data performance point is a KPI or a KPI with an associated KPI value. Data performance points are usually represented by a KPI and therefore may also have historical data performance points and present data performance points

The system may identify the data performance point in the historical career record. The system may also identify and correlate data points or a group of data points in the historical career record, hereinafter signpost(s), that precede the identified data performance point. The signpost(s) identified may then be correlated with the data performance point. Signpost(s), as part of the career record, may also have historical signpost(s) and present signpost(s). Signpost(s) may also be used if the present or historical aspects of these terms are not imperative to a description herein.

### Example Computing Environment

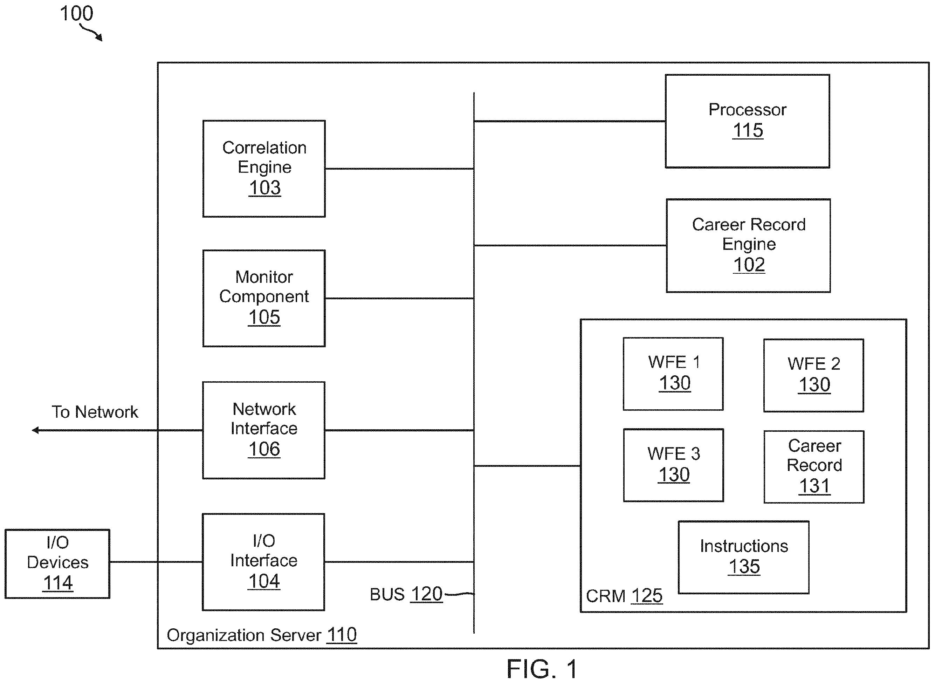

Reference is now made to Fig. 1, depicting a block diagram of a system 100 for predicting the performance of an organization's employee and attributing the predicted performance to signpost(s) in a career record of an employee, according to some embodiments.

System 100 comprises an organization server 110 containing a processor 115. The organization server 110 may be hosted on a single computer or server. Alternatively, the features and functions of the organization server 110, as described herein, may be distributed over a plurality of networked computers, which may consist of or include computers serving a cloud platform. In this disclosure, processor 115 (in the singular) is understood to mean one or more processors 115 of the organization server 110, whether the organization server 110 is hosted on a single computer or whether the features and functions of the organization server 110 are distributed over a plurality of networked computers.

The processor 115 is in connection, via at least one bus 120, to one or more non-transitory computer-readable media (CRMs) 125. The CRMs 125 may comprise any combination of volatile memory, non-volatile memory, and storage devices. In some embodiments, the CRMs 125 store one or more WFE databases storing WFE application data, hereinafter WFE data storage 130. The WFE data storage 130 may be communicatively connected, through the processor(s), with one or more external WFE databases (not shown), from which the WFE data storage 130 receives data about an employee. As an example, the external WFE database may be a human resources WFE database. The CRMs may include a career record database 131 storing historical career record data of employees received across WFE databases and historical signpost(s) correlated with KPIs and associated values and other data points determined by system and methods herein. The career records database 131 and the WFE data storage 130 may be updated, by the processor, with changes or new data and/or recurrent data reports. The processor 115 may retrieve and execute programming instructions 135 stored in the CRM 125. Similarly, processor 115 may retrieve and store application data residing in the CRM 125.

The system may further comprise one or more I/O device interfaces 104 that may allow for the connection of various I/O devices 114 (keyboards, displays. mouse devices, pen input, etc.) also known and a user device to the organization server 110, and network interface 106 through which organization server 110 is connected to a network. The bus 120 may transmit programming instructions and application data, among the processor 115, I/O device interface 104, network interface 106, and CRM 125. The bus 120 may additionally transmit programming instructions and application data, among a career record engine 102, a correlation engine 103, and a monitor component 105 further described herein.

In some embodiments, the acquiring of the historical career record data may be done by a career record engine 102, configured to import periodically the historical career record data from various WFE databases to the career record database 131. In some embodiments, the career record engine 102 is configured to extract, aggregates, and loads (ETL) the historical career records data for the employees of an organization before transmitting to the career records database 131. In some embodiments, the system comprises a correlation engine 103 configured to identify and correlate historical signpost(s) to the input entered by the user through an I/O device or user device of the data performance point, such as a KPI or a KPI with an associated KPI value. In some embodiments, the career record engine instructs the database to send the historical career record data to the correlation engine 103. In some embodiments, the correlation engine 103 clusters and trains a clustering model with the historical career record data. The clustering may also be done by the correlation engine, and may be clustered by employee, KPI or any combination thereof. In some embodiments, the correlation engine clusters and determines the correlation between the data performance point and the signpost(s)by using one of the following: Principal Component Analysis (PCA) Algorithm, K-Means Algorithm, or any combination thereof.

The correlation engine 103 may also store these signpost(s) with the correlated data performance point or KPI in the career record database 131 as correlated signpost(s) paired to correlated data performance point. In some embodiments, the correlation engine 103 is further configured to use the correlated signpost(s) paired with the correlated data performance point, as data sets to cluster and train a clustering model to correlate more signpost(s), predict a performance, attribute reasons to a predicted performance, and determine prescriptive measures to change performance. This clustering and training of already correlated signpost(s) and performance data points creates a history of the cluster models that may be followed and further harvested, by the correlation engine, for information on a single employee over time. In some embodiments, the career records engine 102 periodically acquires historical career records data and new data points from the WFEs trigger the correlation engine 103 to clusters and trains a clustering model with the (new) updated historical career record data previously present career record data. In some embodiments, the correlation engine 103 uses the updated historical career record data, the already correlated signpost(s) and performance data points to analyze for the prescriptive actions.

A monitor component 105 may be configured to monitor present career record data, when instructed by a user, for at least one correlated signpost(s) that has not produced the correlated data performance point in the present career record data. Thus, once a correlated signpost is identified, the monitor component and/or the correlation engine may predict a data performance point. The system can alert the user, through the I/O interface, to the predicted data performance point.

### Example of a Method for Predicting an Outcome

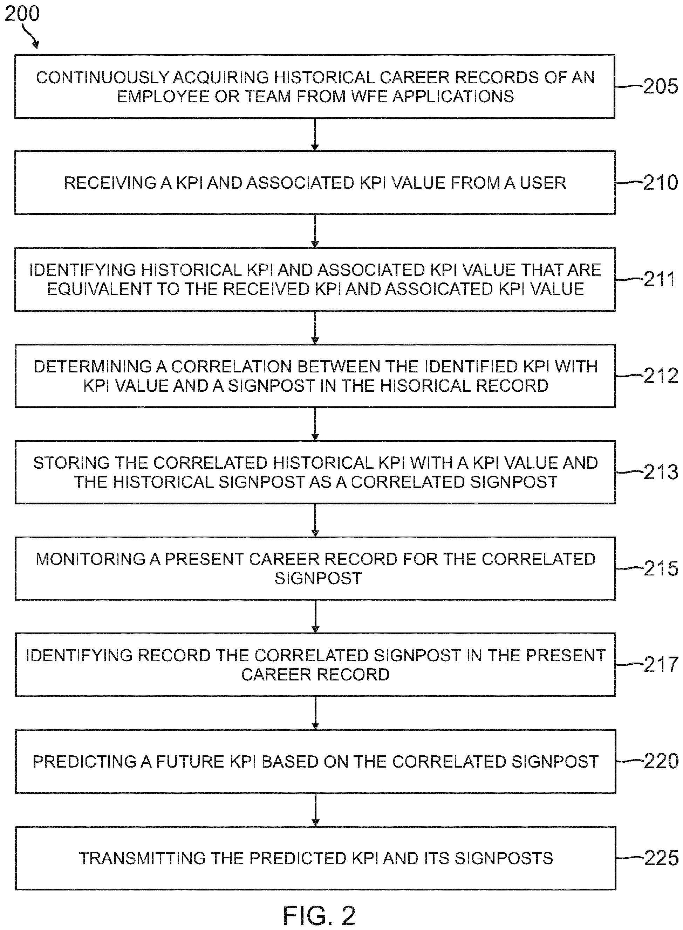

Reference is now made to Fig. 2, depicting a flowchart of a method 200 for predicting the performance of an employee and attributing the predicted performance to events in a career record of the employee, according to some embodiments.

In some embodiments, the method 200 comprises acquiring, at block 205, historical career record data of an employee from a plurality of WFE applications maintained in various WFE databases. The acquiring of the historical career record data may be done by a career record engine 102, configured to acquire the historical career record data. Historical career record data may include one or more historical KPIs. KPIs may be defined by the organization implementing the method 200. Examples of KPIs acquired may include average handle time (AHT) of a contact, customer satisfaction scores, productivity, and quality score. Historical career record data may also contain descriptive data about an employee (e.g., hiring data, supervisor, etc.). The data obtained from various WFE databases may be stored on various WFE databases, copied to the systems WFE data storage 130, the systems career records database 131, or any combination thereof.

Non-limiting examples of the type of career record data and historical career record data found in WFE databases may include any combination of the following: records of employees phone call recordings; (e.g., phone call recordings; records of employees text chat; records of employees emails); scheduling; hiring date; termination date; what teams belonged to and when; who were the direct supervisors and when; personal details; team hierarchy; team size; supervisors managed who and how many; performance of each employee/team across a set of KPIs; KPIs; goals of the employee's/team's KPIs; who worked when and on what activity or contact queue; who took paid time off (PTO) and when; employee preferences; employee skills; who coached who; on what topic and when was someone coached; coaching topics available; KPIs monitored during coaching; employee membership in employee team(s); a measured improvement of a KPI of the employee after the employee was coached; the employees feedback on the coaching and how effective it was; a manager's assessment on the coaching and how effective it was; a set of follow-up items agreed upon during the coaching; direct supervisors over time; who and how many manage the employee; recommended follow-ups to coaching; what lessons are available for eLearning; who took what lesson and when on an eLearning platform; and eLearning lesson scores. Coaching is usually a senior employee monitoring and teaching junior employees.

Non-limiting examples of the type of WFE applications that may provide career record data may include any combination of the following: management components; performance management scorecard components; workforce management (WFM) components; coaching applications; quality management (QM) component; speech analytics component; customer feedback component; desktop and process analytics (DPA) component; and eLearning applications.

It is understood that the above-mentioned WFE applications are mentioned as examples. Additionally, career record data (historical and present) may be culled from other WFE application databases, as well as additional or alternative (non-WFE) sources.

In some embodiments, the method 200 comprises receiving, at block 210, a data performance point from a user via an I/O interface 104. In some embodiments, the data performance point is a KPI with an associated KPI value. In some embodiments, the associated KPI value of the KPI may be an absolute number. In some embodiments, the KPI value is a change (increases or decreases) of the corresponding KPI value, hereinafter KPI delta.

In some embodiments, the method 200 comprises identifying, at block 211, historical KPI and associated KPI values that are equivalent to the received KPI and associated KPI value. In some embodiments, a correlation engine identifies the historical KPI and associated KPI value in the historical career record.

In some embodiments, the method 200 comprises determining, at block 212, a correlation between the historical KPI with the associated KPI value and historical signpost(s) that precede the identified historical KPI associated with a KPI value, such that the signpost(s) are correlated as a reason for the historical KPI with associated KPI value. Signpost(s) may be computed based on an aggregation of the historical career record data of one or more other employees. Such an approach would be less personalized to the employee but would provide readily available historical career record data without waiting for the employee to build up their own historical career record data(e.g., for an employee working in a new environment or for a new employee).

In some embodiments, the method 200 comprises storing, at block 213, the correlated historical signpost(s) paired with historical KPI with the associated KPI value. The correlated historical signpost(s) is saved as a correlated signpost(s). The KPI with associated KPI value that is correlated to the signpost(s) is saved as a correlated data performance point.

In some embodiments, the method 200 comprises monitoring by a monitor component 105, at block 215, the present career record data for correlated signpost(s).

In some embodiments, the method 200 comprises identifying, at block 217, in a present career record data the correlated signpost(s).

In some embodiments, the method 200 comprises predicting, at block 220, KPIs with associated KPI value (one or more data performance points) as a function of the historical signpost(s) already correlated to the correlated KPIs with associated KPI value.

In some embodiments, the method 200 comprises transmitting, at block 225, the predicted KPI with an associated KPI value to a data consumer, such as the user or the organization. The prediction may be referred to as a predicted KPI performance. In some embodiments, an alert is transmitted to the data consumer that the signpost(s) predict that an employee performance may change a KPI value and on which of a plurality of KPIs. In some embodiments, the transmitting is to a data consumer device, such as a device of the employee's manager, a device configured to display the employee's predicted KPI and attribution, a storage database, and the like.

The predicted KPI, as well as an attribution, may be transmitted in a periodic report. In some embodiments, the periodic report includes a summary of the predicted KPIs and attributions during a period. In some embodiments, an attribution or reason based on the correlated signpost(s) for the predicted KPI performance is additionally transmitted to the data consumer. As used and referenced herein, an "attribution" and its logical linguistic relatives and/or derivates means a historical signpost(s) that are the basis or reason for a prediction of future performance or explanation for present performance.

For example, the system may have correlated that an employee was behaving in the manner of a particular historical signpost(s), such as difficulty with a rate of processing incoming calls resulted in a correlation with the KPI and associated KPI value that was received from the user. The system may then find the same historical signpost(s) in the present career record data as a signpost indicating a difficulty with a rate of processing incoming calls. Thus, the system may predict that the KPI correlated with that historical signpost will occur in the present career record data. The system then may suggest, to the user, that the reason for the predicted KPI performance is the present and historical signpost(s), that is, the rate of processing incoming calls preceding the predicted KPI performance.

In some embodiments, a machine-learning algorithm may be employed to classify the data points and construct an AI model for determining historical signpost(s), attributing performances to present signpost(s), and predicting future performances.

In some embodiments, the system repeats predicting KPI with associated KPI value, and the historical career record data is updated, by the career record engine, to reflect recent changes and activities. In some embodiments, the method 200 further comprises updating by the processor, the historical career record data in the career record database 131 with the present career record data now comprising correlated signpost(s) and KPI with associated KPI values. Updating the historical career record data and the predicted KPI may be configurable to be performed at periodic intervals, continuously, by request of an administrator or user, or any combination thereof.

### Example of a Method for Prescriptive Recommendations

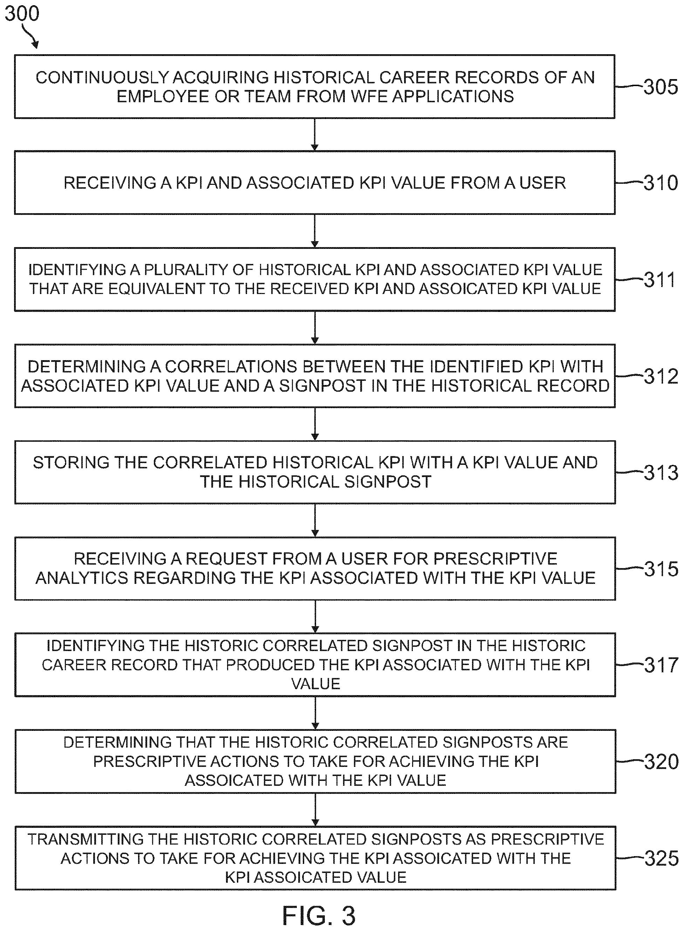

Reference is now made to Fig. 3, depicting a flowchart of a method 300 for obtaining, by a user, prescriptive actions to take for achieving a specific performance of an employee, according to some embodiments.

In some embodiments, the method 300 comprises acquiring, at block 305, historical career record data of an employee from at least one database maintained in various WFE databases. The acquiring of the historical career record data may be done by a career record engine 102, configured to acquire the historical career record data.

In some embodiments, the method 300 comprises receiving, at block 310, a data performance point from a user via an I/O interface 104. In some embodiments, the data performance point is a KPI with an associated KPI value.

In some embodiments, the method 300 comprises identifying, at block 311, historical KPI and associated KPI values that are equivalent to the received KPI and associated KPI value. In some embodiments, the correlation engine 103 identifies the historical KPI and associated KPI value in the historical career record.

In some embodiments, the method 300 comprises determining, at block 312, a correlation between the historical KPI with the associated KPI value and historical signpost(s) that precede the identified historical KPI associated with a KPI value, such that the signpost(s) are correlated as a reason for the historical KPI with associated KPI value.

In some embodiments, the method 300 comprises storing, at block 313, the correlated historical signpost(s) and historical KPI with the associated KPI value. The correlated historical signpost(s) is saved as a correlated signpost(s). The KPI with associated KPI value that is correlated to the signpost(s) is saved as a correlated data performance point.

In some embodiments, the method 300 includes receiving, at block 315, a request from the user for prescriptive analytics regarding a KPI associated with a KPI value entered by the user.

In some embodiments, the method 300 includes identifying, at block 317, at least one historic correlated signpost in the historic career record that produced the KPI associated with the KPI value.

In some embodiments, the method 300 includes determining and analyzing, at block 320, that the at least one historic correlated signpost(s) contain prescriptive actions to take for achieving the KPI associated with the KPI value. Alternatively, if the KPI associated with a KPI value is not a desirable KPI, the correlation engine 103 may suggest prescriptive actions not to take. In some embodiments, the correlation engine 103 is configured to determine prescriptive actions based on analyzing correlations between a plurality of KPIs associated with a KPI value and a plurality of signpost(s).

In some embodiments, prescriptive measures include, for example, a recommendation to change an employee's environment so as to increase their performance (and on which of the plurality of KPIs) or prevent degradation in performance. A prescriptive measure to reassign the employee to at least one of the following: another team or supervisor, another employee's shifts, and another employee's queues. A recommendation to do more coaching and/or eLearning (and on which topics/lesson) and by whom so as to either increase an employee's performance (and on which of the plurality of KPIs) or to prevent a degradation in the employee's performance.

In some embodiments, the method 300 includes transmitting, at block 325, the prescriptive actions to a data consumer, such as the user or the organization. In some embodiments, an alert is transmitted to the data consumer that prescriptive actions have been determined that may change a KPI value and on which of a plurality of KPIs.

In some embodiments, once historical data performance points, such as a KPI, and historical signposts are correlated, the correlation engine can correlate and determine based on signpost(s) entered by a user. For example, if a user wants to determine how a historical signpost(s) such as reassigning the employee to a different shift will affect the employee, the user enters that signpost(s) and requests a plurality of KPI deltas associated with such a signpost(s). The correlation engine may determine a plurality of KPI deltas already correlated with that historical signpost(s) for other employees. The correlation engine can further analyze the determined plurality of KPI deltas for prescriptive actions based on the plurality of historical signpost(s) correlated with the plurality of KPI deltas.

### Non-Limiting Examples

By way of example, the system may correlate and predict when a newly hired employee is expected to reach the performance levels of their peers and/or other goals over one or more KPIs (such a prediction may be based on statistical averages of new employees). In another example, the KPI entered by a user may be adherence to schedule and the signpost found to correlate is the direct supervisor. The correlation engine determined that employees who report to supervisors X and Y are most likely to keep close adherence to their schedule, while employees that report to supervisors A and B are most likely to deviate from the schedules. A prediction alert may be sent to the organization stating that employee C, who reports to supervisor A, will probably not adhere to their schedule. The reasoning given may be that employees who report to supervisors A and B are most likely to deviate from the schedules. The prescriptive analytic presented to the data consumer may be to move employee C to either supervisor X or Y.

In some embodiments, the KPI entered is Average Handle Time (AHT). The signpost(s) found to be correlated is that auto claims submitted on Fridays are most likely to take the longest time to handle, as opposed to any other claim type or auto claims submitted on any other day than Friday. Thus, the data consumer is alerted with the prediction that auto claims will take longer to handle on Fridays. In some embodiments, historical career record data is acquired for multiple employees and teams to enable multiple correlations and aggregations. For example, a specific KPI associated KPI delta of increase value is entered by a user. The KPI with the associated KPI delta of increase value is correlated, for 80% of all employees, with a signpost(s) of training course Z. Therefore, the system may then suggest, for a specific employee, that the KPI and associated KPI delta of increase value is likely (with a likelihood of 80%) to improve if the employee takes course Z.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method for predicting performance of an employee and attribution thereof, comprising:
receiving historical career record data of a plurality of employees;
receiving from a user device, a data performance point of the employee, wherein the data performance point represents data regarding a performance of the employee;
identifying a historical data performance point in the historical career record data, equivalent to the received data performance point;
determining, a correlation between the historical data performance point and one historical signpost, wherein the one historical signpost is a group of data points in the historical career record data that precedes the historical data performance point;
storing, the one historical signpost correlated with the historical data performance point;
monitoring and identifying a present career record data of the employee for the one historical signpost;
predicting a predicted data performance point in the present career record data as a function of the one historical signpost identified in the present career record data; and
transmitting to a data consumer the predicted data performance point.

2. The method of claim 1, further comprising: transmitting to the data consumer the one historical signpost identified in the present career record data as a reason for the predicted data performance point based on the correlation of the historical signpost and the historical data performance point.

3. The method of claim 1, further comprising;
receiving, from a user device, a prescriptive analytics request regarding the data performance point entered by the user device;
identifying a plurality of historical signposts correlated to the data performance point; determining if any of the plurality of historical signposts also are prescriptive actions for the employee to achieve the data performance point; and
transmitting the prescriptive actions to a data consumer.

4. The method of claim 1, wherein the data performance point is a key performance indexes (KPI) or a KPI with an associated KPI value.

5. The method of claim 4, wherein the KPIs of the employee is in a group comprising: average handle time (AHT), customer satisfaction score, productivity, quality score, coaching KPIs, and any combination thereof.

6. The method of claim 1, wherein the group of data points that is the one historical signpost is an individual data point.

7. The method of claim 1, wherein the historical career record data are acquired from at least one Workforce Engagement (WFE) database.

8. A system for predicting performance of an employee comprising:
a memory comprising instructions that when executed on a processor cause the system to perform a method comprising:
acquire a historical career record data of a plurality of employees;
receive, from a user device, a data performance point of the employee, wherein the data performance point represents data regarding a performance of an employee;
identify, a historical data performance point in a historical career record data equivalent to the received data performance point;
determine, a correlation between the historical data performance point and one historical signpost, wherein the one historical signpost is a group of data points in the historical career record data that precedes the historical data performance point;
store, the one historical signpost correlated with the historical data performance point;
monitor and identify a present career record data of the employee for the one historical signpost;
predict a predicted data performance point in the present career record data as a function of the one historical signpost identified in the present career record data; and transmit to a data consumer the predicted data performance point.

9. The system of claim 8, further comprising: transmitting to the data consumer the one historical signpost identified in the present career record data as a reason for the predicted data performance point based on the correlation of the historical signpost and the historical data performance point.

10. The system of claim 8, further comprising;
receive, from a user device, a prescriptive analytics request regarding the data performance point entered by the user device;
identify a plurality of historical signposts correlated to the data performance point; determine, if any of the plurality of historical signposts also are prescriptive actions for the employee to achieve the data performance point; and
transmit the prescriptive actions to a data consumer.

11. The system of claim 8, wherein the data performance point is a key performance indexes (KPI) or a KPI with an associated KPI value.

12. The system of claim 11, wherein the KPIs of the employee is in a group comprising:
average handle time (AHT), customer satisfaction score, productivity, quality score, coaching KPIs, and any combination thereof.

13. The system of claim 8, wherein the group of data points that is the one historical signpost is an individual data point.

14. The system of claim 8, wherein the historical career record data are acquired from at least one Workforce Engagement (WFE) database.

15. A non-transitory computer readable medium comprising computer readable instructions that, when executed by a processor of a processing system, cause the processing system to perform a method comprising:
acquire a historical career record data of a plurality of employees;
receive, from a user device, a data performance point of an employee, wherein the data performance point represents data regarding a performance of the employee;
identify, a historical data performance point in a historical career record data equivalent to the received data performance point;
determine, a correlation between the historical data performance point and one historical signpost, wherein the one historical signpost is a group of data points in the historical career record data that precedes the historical data performance point;
store, the one historical signpost correlated with the historical data performance point;
monitor and identify a present career record data of the employee for the one historical signpost;
predict a predicted data performance point in the present career record data as a function of the one historical signpost identified in the present career record data; and
transmit to a data consumer the predicted data performance point.

16. The non-transitory computer readable medium of claim 15, further comprising:
transmitting to the data consumer the one historical signpost identified in the present career record data as a reason for the predicted data performance point based on the correlation of the historical signpost and the historical data performance point.

17. The non-transitory computer readable medium of claim 15, further comprising;
receive, from a user device, a prescriptive analytics request regarding the data performance point entered by the user device;
identify a plurality of historical signposts correlated to the data performance point; determine, if any of the plurality of historical signposts also are prescriptive actions for the employee to achieve the data performance point; and
transmit the prescriptive actions to a data consumer.
The non-transitory computer readable medium of claim 14, wherein the data performance point is a key performance indexes (KPI) or a KPI with an associated KPI value.

18. The non-transitory computer readable medium of claim 17, wherein the KPIs of the employee is in a group comprising: average handle time (AHT), customer satisfaction score, productivity, quality score, coaching KPIs, and any combination thereof.

19. The non-transitory computer readable medium of claim 15, wherein the group of data points that is the one historical signpost is an individual data point.

20. The A non-transitory computer readable medium of claim 15, wherein the historical career record data are acquired from at least one Workforce Engagement (WFE) database.
